# EUROPÄISCHE PATENTSCHRIFT

(11) **EP 1 969 946 B1**
(45) Veröffentlichungstag und Bekanntmachung des Hinweises auf die Patenterteilung: **26.01.2011**
(21) Anmeldenummer: 08004493.6
(22) Anmeldetag: 11.03.2008
(51) Int. Cl.: A22C 11/12

(54) **Einstellbarer Clipvorschub**
Adjustable clip feeder
Avancement à clip réglable

(30) Priorität: 16.03.2007 DE 102007012778
(43) Veröffentlichungstag der Anmeldung: 17.09.2008
(73) Patentinhaber: Poly-clip System GmbH & Co. KG, 60489 Frankfurt am Main (DE)
(72) Erfinder: Ebert, Detlef, 61231 Bad Nauheim (DE); Hummel, Michael, 65479 Raunheim (DE)
(74) Vertreter: Eisenführ, Speiser & Partner

(56) Entgegenhaltungen:
- EP-A- 1 736 412
- EP-A- 1 746 030
- WO-A-2005/094595
- FR-A- 1 190 749
- FR-A- 1 414 569

## Beschreibung

Die vorliegende Erfindung betrifft eine Clipfördervorrichtung zum Fördern eines aus mehreren Clips bestehenden Clipstrangs in einer Clipmaschine, insbesondere einer Wurstclipmaschine, gemäß dem Oberbegriff des Anspruchs 1.

Insbesondere betrifft die Erfindung eine Clipfördervorrichtung zum Fördern eines aus mehreren Verschlussklammern bzw. Clips bestehenden Verschlussklammern- bzw. Clipstrangs in einer Clipmaschine, insbesondere einer Wurstclipmaschine, wobei die Clipfördervorrichtung eine Antriebseinheit und ein Vorschub-bzw. Transportelement aufweist. Das Vorschubelement ist mit seinem Antriebsende mit der Antriebseinheit gekoppelt. Dabei ist es von der Antriebseinheit in der Weise antreibbar, dass sein dem Antriebsende gegenüberliegendes Förderende eine elliptische Bahn beschreibt und zum schrittweisen Fördern des Clipstranges in Zwischenräume zwischen zwei Clips des Clipstrangs eingreift und diesen schrittweise in Vorschubrichtung fördert.

In der Praxis ist es bekannt, dass beispielsweise bei der Herstellung von Wurstprodukten das Wurstbrät von einer Füllmaschine über ein Füllrohr einer Clipmaschine zugeführt wird. In der Clipmaschine wird das Füllgut in ein durch einen ersten Clip an dem ersten Wurstende einseitig verschlossenes, schlauchförmiges Verpackungshüllenmaterial abgefüllt und durch Setzen eines zweiten Clips an dem zweiten Wurstende verschlossen. Anschließend wird das Verpackungshüllenmaterial des so entstandenen Wurstprodukts von dem Vorrat des übrigen Verpackungshüllenmaterials abgetrennt und das fertiggestellte Wurstprodukt aus der Clipmaschine ausgetragen.

Zum Setzen und Verschließen der Verschlussklammern oder des Clips besitzt die Clipmaschine üblicherweise ein erstes Verschließwerkzeug, die Matrize, und ein zweites Verschließwerkzeug, den Stempel. Diese sind zwischen der Mündungsöffnung des Füllrohrs und der Transporteinrichtung der Clipmaschine zum Austragen der fertiggestellten Wurstprodukte angeordnet. Dabei befindet sich üblicherweise die Matrize unterhalb des Förderweges der Wurstprodukte und der Stempel oberhalb dieses Förderweges. Nach dem Einlegen eines Clips in die Matrize und dem Einlegen eines gerafften füllgutfreien Zopfes an Verpackungshüllenmaterial in diesen Clip werden beide Verschließwerkzeuge so aufeinander zu bewegt, dass sie den zwischen sich befindlichen Clip zusammenpressen und dadurch das Verpackungshüllenmaterial verschließen.

Mit der eingangs beschriebenen Clipmaschine werden typischerweise Clips verarbeitet, die aus einem geprägten Aluminiumdrahtstrang gefertigt werden. Hierzu sind die Clips U-förmig vorgebogen und hängen mittels an ihren Schenkelenden abgekröpften Stegen zusammen. Der so gebildete Clipstrang wird der Matrize durch eine Clipfördervorrichtung entlang einer Führungsbahn zugeführt, die in den Bereich des zugeordneten Verschließwerkzeugs mündet.

Beim Transport bzw. Vorschub eines Clipstrangs durch die in der Praxis bekannten Clipfördervorrichtungen wird der vorderste Clip bekanntermaßen von einem intermittierend eingreifenden Vorschubelement der Matrize zugeführt. Solange der vorderste Clip noch mit dem nachfolgenden Clipstrang verbunden ist, wird er von diesem stabil in der Matrize gehalten. Beim Verschließen wird zunächst die Matrize in ihre Verschließ- oder Hubendstellung gefahren. In dieser Stellung wird der vorderste Clip gegen den Zopf aus Verpackungshüllenmaterial gedrückt und ist zwischen diesem sowie der Matrize eingespannt.

Eine Clipmaschine der eingangs genannten Art ist aus der EP-Offentegungsschrift 1 736 412 bekannt. Die dort gezeigte Clipmaschine weist einen Verschließhebel mit einem ersten Verschließwerkzeug, der Matrize, auf, welches an dem Verschließhebel angeordnet und mit diesem schwenkbar ist. Ein zweites Verschließwerkzeug, der Stempel, ist entlang linearer Führungsmittel relativ zum ersten Verschließwerkzeug verfahrbar angeordnet. Die Verschließwerkzeuge sind zum Verschließen von Clips relativ zueinander zwischen einer Öffnungsstellung und einer Verschlussstellung bewegbar. Ein Clipstrang wird dem Verschließhebel entlang einer in der Nähe der Schwenkachse des Verschließhebels beginnenden Führungsbahn in Richtung der Matrize geführt. Als Antrieb für den Transport des Clipstrangs ist am vorderen Ende des Verschließhebels ein intermittierend an dem Clipstrang angreifendes Fördermittel in Form eines exzentrisch angetriebenen Hebels angeordnet. Das Fördermittel hebt den Clipstrang an seinem der Matrize nahen Ende an, zieht ihn in Richtung der Matrize nach und legt dabei den vordersten Clip des Clipstrangs in die Matrize ein.

Zeitversetzt, d.h. noch während die Matrize in dieser Stellung verharrt, bewegt sich der Stempel auf die Matrize zu. Unmittelbar vor dem Verschließen des Clips wird zunächst mittels einer an dem Stempel vorgesehenen Schereinrichtung der vorderste Clip von dem nachfolgenden Clipstrang abgetrennt. In diesem Moment ist der vorderste Clip frei und wird nur noch durch die Spannung des Zopfes gegen die Matrize angedrückt. Anschließend wird der Clip durch eine weitere Annäherung des Stempels an die Matrize plastisch verformt, bis sich die Verschließwerkzeuge bis auf die Klammerhöhe angenähert haben und der Clip um den Schlauchzopf herum verschlossen ist.

Solche bekannten Clipfördervorrichtungen haben üblicherweise einen fest eingestellten Vorschubhub, der der Clipgröße angepasst ist. Sollen Clips einer anderen Größe verarbeitet werden, beispielsweise bei Änderung des Kalibers der Wurstprodukte, ist es nötig, die Vorschublänge bzw. den Vorschubhub der neuen Clipgröße anzupassen.

Dabei ist es in der Praxis bei den bekannten Clipfördervorrichtungen weiterhin bekannt, zum Erzeugen der intermittierenden Vorschubbewegung einen Exzenter zu verwenden. Hierdurch kann durch Verschiebung des Schwenkpunktes des Vorschubelementes eine Veränderung des Vorschubhubs bzw. der Vorschublänge erzielt werden. Da üblicherweise der Schwenkpunkt des Vorschubelements an der Matrizenauflage bzw. Matrizenhalterung befestigt ist, muss diese komplett gewechselt werden, wenn eine andere Clipgröße bearbeitet werden soll. Dies erfordert aber den Einsatz von Werkzeug sowie ein zumindest teilweises Zerlegen der Clipmaschine. Dies ist zeitaufwändig und damit kostenintensiv.

Die in der Praxis bekannten Clipfördervorrichtungen weisen einen weiteren Nachteil auf. Der Clipstrang ist für einen Zeitraum zwischen dem Abtrennen des in der Matrize befindlichen Clips und dem erneuten Eingreifen des Vorschubelements in die folgende Lücke zwischen zwei Clips des Clipstrangs in Vorschubrichtung nicht arretiert. Steht der Clipstrang durch die Vorschubbewegung unter Zugspannung, kann er beim Abtrennen des vordersten Clips vom Clipstrang im Eingriffsbereich des Vorschubelements entgegen der Vorschubrichtung zurückgezogen werden, was einen gewünschten Eingriff erschwert oder verhindert.

Aufgabe der vorliegenden Erfindung ist es eine Clipfördervorrichtung zum Fördern eines aus mehreren Clips bestehenden Clipstrangs in einer Clipmaschine der eingangs genannten Art bereitzustellen, die einfach gebaut ist und die eine einfache Einstellung der Vorschublänge bzw. des Vorschubhubs des Clipstrangs erlaubt.

Die vorstehende Aufgabe wird durch die Merkmale des Anspruchs 1 gelöst. In den sich daran anschließenden Ansprüchen 2 bis 10 finden sich vorteilhafte Ausgestaltungen hierzu.

Zur Lösung der Aufgabe wird erfindungsgemäß eine Clipfördervorrichtung zum Fördern eines aus mehreren Clips bestehenden Clipstrangs in einer Clipmaschine, insbesondere einer Wurstclipmaschine, vorgeschlagen, die eine Antriebseinheit und ein Vorschubelement aufweist, das mit seinem Antriebsende mit der Antriebseinheit gekoppelt ist und von der Antriebseinheit in der Weise antreibbar ist, dass sein Förderende eine elliptische Bahn beschreibt und zum schrittweisen Fördern des Clipstranges in Zwischenräume zwischen zwei Clips des Clipstrangs eingreift und diesen schrittweise in Vorschubrichtung fördert.

Bei der vorgeschlagenen Vorrichtung ist erfindungsgemäß weiterhin eine Einstelleinrichtung mit einer Schwenkachse vorgesehen, um die das Vorschubelement schwenkbar ist und die in ihrer Lageposition werkzeuglos in der Weise einstellbar ist, dass wenigstens eine der beiden Achsen, Haupt- oder Nebenachse, der von dem Förderende des Vorschubelements beschriebenen elliptischen Bahn veränderbar ist. Eine solche Einstellvorrichtung ermöglicht eine einfaches und schnelles Anpassen des Vorschubhubs des Vorschubelements an die jeweilige Clipgröße, ohne dass dabei Werkzeug eingesetzt werden muss und/oder dass die Clipmaschine zumindest teilweise zerlegt werden muss.

In einer bevorzugten Ausbildung ist die Lageposition der Schwenkachse der Einstelleinrichtung durch einen Exzenter einstellbar. Die Schwenkachse ist somit auf einer Kreisbahn verstellbar, wodurch bei einer Änderung der Lageposition der Schwenkachse ein gleichzeitiges Verstellen des Vorschubhubs bzw. der Vorschublänge wie auch der Eingriffsposition des Förderendes des Vorschubelements erfolgt. Diese Verstellmöglichkeit ist vorteilhaft, da sich bei geänderter Clipgröße neben dem Vorschubhub auch der Eingriffspunkt am Clipstrang ändert.

Selbstverständlich ist es auch möglich, die Einstellbarkeit der Lageposition der Schwenkachse der Einstelleinrichtung durch andere Ausgestaltungen wie einer Linearführung zu realisieren. Eine solche Linearführung ist einfach zu herzustellen und durch die Wahl einer entsprechenden Form sehr zuverlässig. Weiterhin bietet sie bei entsprechender Ausrichtung hinsichtlich der Einstellbarkeit die gleichen Vorteile, wie die zuvor bei dem Exzenter genannten.

Die Lageposition der Schwenkachse der Einstelleinrichtung kann auf verschiedene Weise eingestellt werden. Geschieht dies in vorteilhafter Weise von außen durch ein Stellelement, so kann die Einstellung manuell erfolgen.

Das Vorschubelement darf nicht fest mit der Schwenkachse verbunden sein, sondern muss, um die gewünschte Funktion korrekt zu erfüllen, entlang der Schwenkachse verschiebbar geführt sein. In einer vorteilhaften Ausführung greift die Schwenkachse der Einstelleinrichtung in ein Langloch im Vorschubelement ein. Durch diese einfache und sichere Konstruktion wird die Führung des Vorschubelements sichergestellt.

Die Antriebseinheit für das Vorschubelement kann durch verschiedene Antriebselemente gebildet sein. In einer besonders vorteilhaften Ausführung ist das Antriebselement ein Exzenter. Die gewünschte Ellipsenbahn des Förderendes des Vorschubelements lässt sich durch die Verwendung eines Exzenters besonders einfach erzeugen und in der gewünschten Weise verändern.

Dabei ist es weiterhin vorteilhaft, wenn die Welle des Antriebselements um eine nicht verschiebbare Achse rotiert. Bei der vorbeschriebenen Verwendung eines Exzenters rotiert der zugehörige Exzenterzapfen auf einer räumlich in Relation zur Schwenkachse der Einstelleinrichtung festgelegten Kreisbahn. So wird jeder Position der Schwenkachse der Einstelleinrichtung genau ein bestimmter Vorschubhub und ein zugehöriger Eingriffspunkt des Förderendes des Vorschubelements zugeordnet.

In einer weiteren vorteilhaften Ausführung der erfindungsgemäßen Vorrichtung ist die Achse des Antriebselements der Antriebseinheit zusätzlich so einstellbar, dass wenigstens eine der beiden Achsen, Haupt- oder Nebenachse, der von dem Förderende des Vorschubelements beschriebenen elliptischen Bahn veränderbar ist. Durch eine horizontale und/oder vertikale Verschiebbarkeit der Achse des Antriebselements der Antriebseinheit würde sich die Kreisbahn des Exzenterzapfens des Antriebselements entsprechend verschieben, wodurch eine weitere Einstellmöglichkeit zur Verstellung des Vorschubhubs und des Eingriffspunkts des Vorschubelements geschaffen würde.

Durch den Vorschub des Clipstrangs können in diesem Zugspannungen auftreten. Beim Abtrennen des vordersten Clips kann der Clipstrang, da dieser üblicherweise nur durch den vordersten, in der Matrize befindlichen Clip gehalten ist, durch die vorgenannten Zugspannungen zumindest teilweise aus dem Eingriffbereich des Vorschubelements entgegen der Vorschubrichtung zurückgezogen werden, wodurch ein erneuter genauer Eingriff des Vorschubelements erschwert oder verhindert wird. Die weiterhin vorgesehene selbsttätig wirkende Rückhalteeinrichtung, die mit einem sich am vorderen Ende des Clipstrangs befindlichen Clip in Eingriff bringbar ist, verhindert wirkungsvoll ein Zurückrutschen des Clipstrangs, nachdem der in der Matrize liegende Clip vom Clipstrang abgetrennt wurde. Auf diese Weise wird durch die so erreichte immer gleiche Position des Clipstrangs der korrekte Eingriff des Vorschubelements in den Clipstrang gewährleistet. Es ist noch zu bemerken, dass die Rückhalteeinrichtung sowie die nachstehend noch näher erläuterten vorteilhaften Ausgestaltungen hiervon auch unabhängig von der vorstehend näher beschriebenen Einstelleinrichtung bei einer gattungsgemäßen Clipfördervorrichtung eingesetzt werden kann, da die Möglichkeit zum Einstellen der Clipfördervorrichtung auf verschiedene Clipgrößen unabhängig ist von dem Problem, den Clipstrang nach einem Förder- bzw. Vorschubschritt in seiner Position zu halten.

Die Ausführung der Rückhalteeinrichtung kann auf verschiedene Weise realisiert werden. Eine besonders vorteilhafte Ausgestaltung wird dadurch erreicht, dass an der Matrize neben der den ersten Clip des Clipstrangs beim Verschließen fixierenden ersten Cliptasche eine Ausnehmung bzw. zweite Cliptasche vorgesehen ist, in der vorzugsweise der dem vordersten Clip unmittelbar nachfolgende Clip gehalten wird, wobei Kraftaufbringungsmittel zum Aufbringen einer Fixierkraft auf diesen Clip einwirken. Diese Kraftaufbringungsmittel können beispielsweise durch eine Clipführung gebildet sein, welche sich auf der Oberseite des Clipstranges befindet und die Haltekraft auf den in der zweiten Tasche der Matrize befindlichen Clip aufbringt.

In einer weiteren vorteilhaften Ausführung der erfindungsgemäßen Vorrichtung ist die Rückhalteeinrichtung durch einen Haken gebildet, der z.B. parallel neben oder unterhalb des Clipstrangs angeordnet sein kann. Dieser entgegen der Vorschubrichtung ausgerichtete Haken könnte beispielsweise durch die vertikale Hubbewegung des Clipstrangs beim Vorschub außer Eingriff mit dem Clipstrang gebracht werden und beim Absenken des Clipstrangs nach erfolgtem Vorschub wieder in diesen eingreifen. Durch einen solchen Haken wird der Clipstrang sicher fixiert und ein Zurückrutschen entgegen der Förderrichtung nach Abtrennen des in der Matrize befindlichen Clips verhindert.

Die Rückhalteeinrichtung kann ebenfalls durch einen hydraulischen oder pneumatischen Zylinder gebildet sein.

Weitere vorteilhafte Ausgestaltungen sowie ein Ausführungsbeispiel der Erfindung werden nachstehend im Zusammenhang mit den beigefügten Zeichnungsfiguren näher erläutert. Die bei der Beschreibung des Ausführungsbeispiels verwendeten Begriffe "oben", "unten", "links" und "rechts" beziehen sich auf die Zeichnungsfiguren in einer Ausrichtung mit normal lesbaren Bezugszeichen und Figurenbezeichnungen.

Es zeigen:
- Fig. 1: eine Seitenansicht von rechts des prinzipiellen Aufbaus der erfindungsgemäßen Clipfördervorrichtung in einer Clipmaschine;
- Fig. 2: eine Seitenansicht von links auf die erfindungsgemäße Clipfördervorrichtung;
- Fig. 3: eine horizontale Schnittdarstellung der erfindungsgemäßen Clipfördervorrichtung; und
- Fig. 4: eine vertikale Schnittdarstellung der erfindungsgemäßen Clipfördervorrichtung.

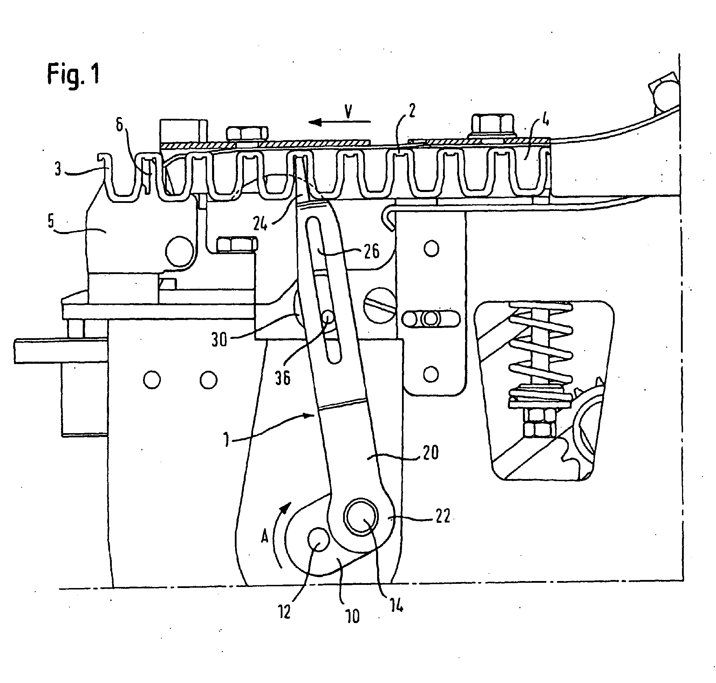

Das nachstehend beschriebene Ausführungsbeispiel einer erfindungsgemäßen Clipfördervorrichtung kommt bei beispielsweise Wurstclipmaschinen der eingangs genannte Art zum Einsatz. Wie in Figur 1 zu sehen ist, weist die Clipfördervorrichtung 1 als wesentliche Baugruppen eine Antriebseinheit 10, ein Vorschub- bzw. Transportelement 20, eine Einstelleinrichtung 30 sowie eine Rückhalteeinrichtung 40 auf.

Die Antriebseinheit 10, die im gestellten Ausführungsbeispiel als Antriebselement einen Exzenter aufweist, befindet sich unterhalb des waagerecht verlaufenden und in einer Clipführung 4 geführten Clipstrangs 2. Der Exzenter ist auf einer drehbar gelagerten Antriebswelle 12 montiert. Der Exzenter ist dreh- und axialfest montiert so angeordnet, dass sein Exzenterzapfen einen in der Ebene der Figur 1 verlaufenden Kreis beschreibt. Der Exzenter kann beispielsweise durch einen nicht weiter dargestellten Riemen- oder Kettenantrieb in Drehung versetzt werden, welcher von dem Hauptmaschinenantrieb bzw. von der Hauptmaschinenachse angetrieben wird. Ebenso ist es möglich, dass der Antrieb des Exzenters durch einen ebenfalls nicht weiter dargestellten hydraulischen oder pneumatischen Zylinder oder durch einen wiederum nicht weiter dargestellten Elektromotor angetrieben werden. Er besteht üblicherweise aus nichtrostendem Stahl.

Die Clipführung 4 ist durch ein waagerecht verlaufendes und nach unten offenes im Wesentlichen U-förmiges Profil gebildet. In diesem wird der Clipstrang 2 in Vorschubrichtung V verschiebbar gehalten und gegen seitliches Verrutschen gesichert (vgl. Fig. 1). Die Clipführung 4 besitzt einen nicht näher dargestellten Schwenkpunkt, der es ihr erlaubt, zusammen mit dem Clipstrang 2 angehoben und wieder abgesenkt zu werden, wenn das Vorschubelement 20 einen nachstehend noch näher erläuterten Vorschubschritt durchläuft.

Das im wesentlichen vertikal angeordnete langgestreckte und hebelartige Vorschubelement 20 besteht aus einem annähernd quaderförmigen Flachmaterial, dessen Haupterstreckungsebene in der Ebene der Figur 1 liegt. Das Vorschubelement 20 besteht ebenfalls vorzugsweise aus rostfreiem Stahl. Es weist an seinem Antriebsende 22 ein Auge auf, über das es axialfest mit dem Exzenterzapfen 14 und um dessen Längsachse drehbar mit der Antriebseinheit 10 verbunden ist. Das Förderende bzw. der Förderzahn 24 des Vorschubelements 20 wird durch ein ebenfalls quaderförmiges Flachmaterial gebildet, das jedoch senkrecht zur Haupterstreckungsebene des Vorschubelements 20 angeordnet ist. In die obere Hälfte des Transportelements 20 ist ein Langloch 26 eingearbeitet, das mittig auf dem Transportelement 20 und in dessen Längserstreckung verläuft.

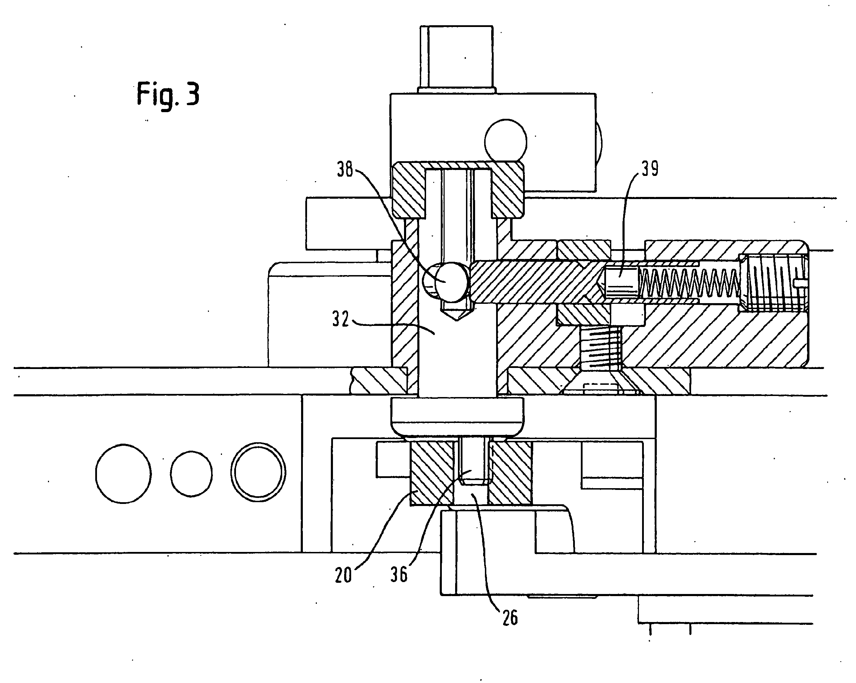

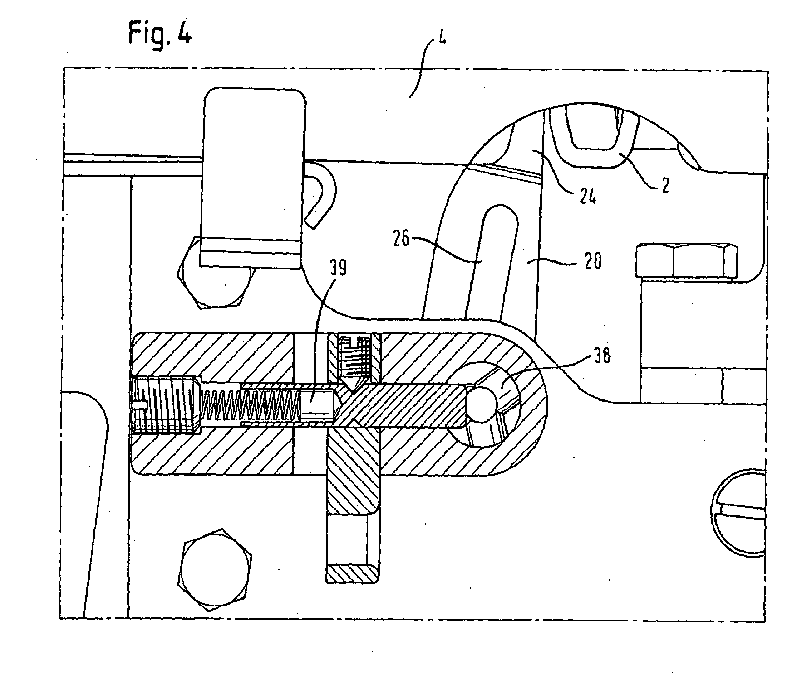

Wie in Fig. 3 zu erkennen ist, besteht die Einstelleinrichtung 30 aus einer im Cliphebel drehbar gelagerten Welle 32, an deren in der Darstellung oberen Ende ein Einstellelement 34 angebracht ist, mittels dem die Welle 32 um ihre Längsachse gedreht werden kann. An dem Einstellelement 34 gegenüber liegenden Ende der Welle 32 ist an dieser ein Exzenter 35 angeformt. Er weist einen achsparallel zur Welle 32 verlaufenden Exzenterzapfen 36 auf, der in Richtung des Vorschubelements 20 ausgerichtet ist. In der Welle 32 der Einstelleinrichtung 30 sind weiterhin Rasteinrichtungen in Form von radial angeordneten Bohrungen 38 vorgesehen, in die ein nicht näher erläutertes, federbelastetes Sicherungselement 39 eingreift, um die gewählte Position der Einstelleinrichtung 30 zu fixieren und gegen unbeabsichtigtes Verstellen zu sichern (vgl. Fig. 4).

Die Einstelleinrichtung 30 ist im Bereich des Langlochs 26 des Vorschubelements 20 und im Wesentlichen senkrecht über der Antriebseinheit 10 angeordnet. Die Achse der Welle 32 der Einstelleinrichtung 30 verläuft horizontal in sowie senkrecht zur Vorschubrichtung V. Der zum Vorschubelement 20 weisende exzentrischer Zapfen 36 greift in das Langloch 26 ein und bildet so die Schwenkachse 36 für das Transportelement 20. Die Einstelleinrichtung 30 ist ebenfalls vorzugsweise aus rostfreiem Stahl hergestellt.

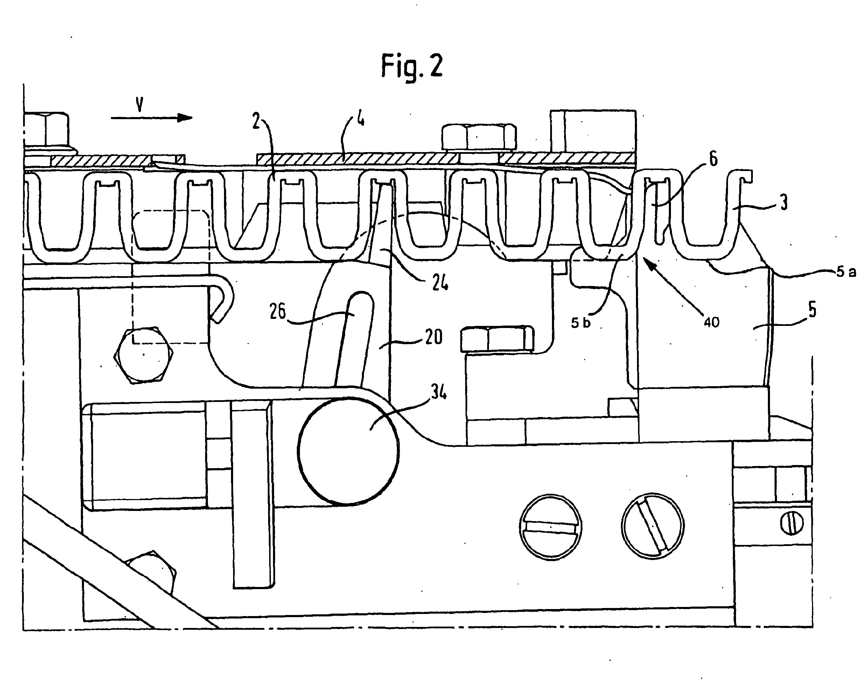

Da das in Fig. 2 gezeigte Stellelement 34 kaum mechanischen Belastungen erfährt, kann es beispielsweise auch aus Aluminium hergestellt sein und über eine entsprechend griffig gestaltete Oberfläche verfügen, um ein manuelles Einstellen der Clipgröße weiter zu erleichtern. Wie weiterhin in Fig. 2 zu sehen ist, kann auf dem Stellelement 34 eine den einstellbaren Clipgrößen entsprechende Beschriftung vorgesehen sein.

Die Rückhalteeinrichtung 40 für den Clipstrang 2 wird im dargestellten Ausführungsbeispiel zunächst durch eine an der Matrize 5 neben deren ersten Tasche 5a, welche einen zu verschließenden Clip 3 (1. Clip des Clipstrangs) hält, vorgesehenen zweiten Tasche 5b gebildet, die sich, wie dies aus Fig. 2 zu entnehmen ist, links von der Scherkante 6 der Matrize 5 befindet. Wie weiterhin aus Fig. 2 entnehmbar ist, ist in dieser zweiten Tasche 5b der dem ersten Clip 3 unmittelbar nachfolgende zweite Clip 3 angeordnet. Damit der dem ersten Clip unmittelbar nachfolgende zweite Clip 3 in der zweiten Tasche 5b der Matrize 5 angeordnet bleibt, erstreckt sich weiterhin die Clipführung 4 bis über diesen zweiten Clip 3, wie dies ebenfalls auf Fig. 2 ersichtlich ist. Insbesondere das horizontal verlaufende obere Abschlussblech der Clipführung 4 drückt auf den in der zweiten Tasche 5b der Matrize 5 befindlichen Clip 3, so dass der Clipstrang bei Außereingriffgelangen des Vorschubelementes 20 nicht entgegen der Vorschubrichtung V zurückgezogen wird. Wie schließlich ebenfalls noch aus Fig. 2 entnehmbar ist, weist die zweite Tasche 5b die gleiche Ausgestaltung wie die erste Tasche 5a auf, d.h., ihr Bodenkonturverlauf entspricht dem eines Clips 3. Es ist noch zu bemerken, dass in den Fig. 1 und 2 die im Stand der Technik bisher verwendete Blattfeder erkennbar ist, die ggf. zusätzlich vorgesehen sein kann. Jedoch ist die erfindungsgemäße Rückhalteeinrichtung 40, die, wie bereits vorstehen erwähnt, unabhängig von der Einstelleinrichtung 30 bei einer gattungsgemäßen Clipfördervorrichtung eingesetzt werden kann, auf diese Blattfeder nicht mehr angewiesen. Vielmehr genügt die zweite Tasche 5b der Matrize 5 sowie die Clipführung 4.

Der Bewegungsablauf der erfindungsgemäßen Vorrichtung wird im folgenden anhand des Vorschubs eines Clips ausgehend vom in Fig. 1 dargestellten Zustandes erläutert: Wie in Fig. 1 zu sehen ist, befindet sich ein Clip 3 in der Matrize 5. Dieser Clip 3 ist über einen nicht näher bezeichneten Steg noch mit dem Clipstrang 2 verbunden. Das Förderende 24 des Vorschubelements 20 befindet sich in Eingriff mit dem Clipstrang 2. Es ragt von unten zwischen zwei benachbarte über einen Steg miteinander verbundene Clips 3 und drückt diesen Steg gegen die Clipführung 4. In der dargestellten Position ist der Clipstrang 2 durch den in der Matrize 5 befindlichen Clip 3, die Rückhalteeinrichtung 40 sowie durch das Förderende 24 des Vorschubelements 20 gegen Verrutschen gesichert.

Im weiteren Verlauf des Herstellungsprozesses beispielsweise eines Wurstprodukts rotiert die Antriebseinheit 10 in der mit A in Fig. 1 gekennzeichneten Richtung im Uhrzeigersinn um die Drehachse der Welle 12. Dabei beschreibt das Antriebsende 22 des Vorschubelements 20 einen in der Ebene der Fig. 1 liegenden Kreis. Etwa zu dem Zeitpunkt, zu dem der Exzenterzapfen 14 der Antriebseinheit 10 eine durch die Achse der Drehwelle 12 gedachte, waagerecht verlaufende Linie rechts dieser Achse überquert, befindet sich das Förderende 24 des Vorschubelements 20 außer Eingriff mit dem Clipstrang 2. Im weiteren Verlauf der Rotation der Antriebseinheit 10 wird das Vorschubelement 20 aufgrund der Führung durch die Schwenkachse 36 in dem Langloch 26 nach unten bewegt und um die Schwenkachse 36 verschwenkt. Wegen dieser Anordnung beschreibt bei einer Rotation der Antriebseinheit 10 im Uhrzeigersinn das Förderende 24 des Vorschubelements 20 eine elliptische Bahn entgegen dem Uhrzeigersinn. Während der Exzenterzapfen 14 die untere Hälfte der Kreisbahn um die Achse der Drehwelle 12 der Antriebseinheit 10 von rechts beginnend beschreibt, bewegt sich das Förderende 24 des Vorschubelements 20 auf der unteren Hälfte der elliptischen Bahn von links nach rechts. Dabei gelangt es außer Eingriff mit dem Clipstrang 2 und bewegt sich entsprechend der elliptischen Bahn nach unten und wieder nach oben, um wieder, um die Länge der waagerecht verlaufenden Ellipsenachse nach rechts versetzt, in den Clipstrang 2 einzugreifen.

Zeitgleich mit der zuvor beschriebenen Bewegung des Vorschubelements 20 werden die Matrize 5 und ein nicht dargestellter Stempel der Schließwerkzeuge der Clipmaschinen zusammengefahren, um den im Clip 3 eingelegten, nicht dargestellten Zopf aus Verpackungshüllenmaterial zu verschließen. Beim Zusammenfahren von Matrize 5 und des nicht dargestellten Stempels wird der Clip 3 durch das Zusammenwirken der Scherkante 6 der Matrize 5 und einer entsprechenden Scherkante des Stempels vom Clipstrang 2 abgeschert und um den in dem Clip 3 liegenden Zopf aus Verpackungshüllenmaterial zusammengepresst, um diesen zu verschließen. Dabei verhindert die Rückhalteeinrichtung 40 ein Zurückrutschen des Clipstrangs 2 entgegen der Vorschubrichtung V durch das Abstützen des zur Matrize 5 weisenden Schenkels des vordern Clips 3 des Clipstrangs 2. Das fertig verschlossene Wurstprodukt wird aus der Clipmaschine transportiert.

Der Exzenterzapfen 14 der Antriebseinheit 10 beschreibt im weiteren Verlauf des Herstellungsprozesses eines Wurstprodukts die obere Hälfte der Kreisbahn. Nach dem Überschreiten der durch die Achse der Drehwelle 12 gedachten, waagerecht verlaufenden Linie links dieser Achse der Antriebseinheit 10, bewegt sich das Förderende 24 des Vorschubelements 20, das jetzt wieder in Eingriff mit dem Clipstrang 2 steht, auf der oberen Hälfte der elliptischen Bahn von rechts nach links. Dabei wird der Clipstrang 2 zusammen mit der Clipführung 4 angehoben und wieder in die dargestellte Position abgesenkt. Während des Hebens und Senkens der Clipführung 4 wird der Clipstrang 2 in der Führung 4 um die Länge der waagerecht verlaufenden Ellipsenachse bzw. um eine Cliplänge nach links verschoben und der vordere Clip 3 wird über die Scherkante 6 hinweg in die erste Tasche 5a der Matrize 5 und der sich unmittelbar daran anschließende zweite Clip 3 in die zweite Tasche 5b der Matrize 5, die zusammen mit der Clipführung 4 die Rückhalteeinrichtung 40 bildet, gefördert.

Die in Fig. 1 dargestellte Ausgangssituation ist wieder erreicht und der beschriebene Bewegungsablauf beginnt von vorn.

Bezüglich der Clipgrößeneinstellung wurde für den zuvor beschriebenen Herstellungsprozess zunächst ein Clipstrang 2 in die Clipmaschine eingelegt und das Stellelement 34 in die entsprechende Position, die der Größe der eingelegten Clips entspricht, gedreht. Wird für einen weiteren Herstellungsprozess beispielsweise das Kaliber der herzustellenden Wurstprodukte geändert, ist es meist notwendig, neben anderen Verschließwerkzeugen auch Clips anderer Größe zu verwenden. Solche Clips haben nicht nur eine andere Schenkellänge, sondern meist auch eine andere Breite, sodass eine Anpassung des Clipvorschubs erfolgen muss.

Diese Anpassung erfolgt wiederum über das manuelle Betätigen des in Fig. 2 dargestellten Stellelements 34 der Einstelleinrichtung 30. Hierzu weist das Stellelement 34 eine Einteilung entsprechend der wählbaren Clipgrößen auf. Die gewünschte Clipgröße wird durch Drehen des Stellelements 34 eingestellt. Durch das Drehen des Stellelements 34 wird die Schwenkachse 36 des Vorschubelements 20 auf einer Kreisbahn um die Drehachse der Welle 32 der Einstelleinrichtung 30 bewegt (vgl. Fig. 1). Die Schwenkachse 36 bewegt sich dabei sowohl horizontal wie auch vertikal.

Durch das Verstellen der Schwenkachse 36 ändern sich sowohl der Vorschubhub als auch der Eingriffspunkt des Förderendes 24 des Vorschubelements 20

Eine vertikale Verschiebung des Schwenkachse 36 nach unten vergrößert die obere Hebellänge des Vorschubelements 20 und die untere, antriebsseitige Hebellänge verkürzt sich entsprechend. Dadurch vergrößert sich der Vorschubhub des Förderendes 24 des Vorschubelements 20. Eine Verschiebung der Schwenkachse 36 nach oben verkürzt den oberen Teilhebel des Vorschubelements 20 und verlängert den unteren Teilhebel, wodurch sich der Vorschubhub des Vorschubelements 20 verringert.

Die horizontale Verstellkomponente bewirkt eine Verschiebung des Eingriffspunktes des Förderendes 24 des Vorschubelements 20 in den Clipstrang 2 nach rechts bzw. links.

Befindet sich die Schwenkachse 36 der Einstelleinrichtung 30 auf einer gedachten senkrechten Linie, die durch die Achse 12 der Antriebseinheit 10 verläuft, beschreibt das Förderende 24 des Vorschubelements 20 eine Ellipse, deren Hauptachse ebenfalls durch diese senkrechte gedachte Linie verläuft. Auf dieser Linie liegt der Punkt des höchsten vertikalen Hubs des Clipstrangs 2. Rechts dieser Linie, entsprechender Figur 1, liegt der Eingriffspunkt des Förderendes 24 in den Clipstrang 2 und im gleichen Abstand links dieser Linie liegt der Punkt, an den das Förderende 24 des Vorschubelements 20 außer Eingriff mit dem Clipstrang 2 gelangt.

Wird die Schwenkachse 36 der Einstelleinrichtung 30 horizontal nach rechts verschoben, verschiebt sich ebenfalls die elliptische Bahn, die das Förderende 24 beschreibt, nach rechts. Damit verschieben sich auch der Eingriffspunkt des Förderendes 24 in den Clipstrang 2 und der Punkt, an den das Förderende 24 des Vorschubelements 20 außer Eingriff mit dem Clipstrang 2 gelangt, entsprechend nach rechts.

Bei einer Verschiebung der Schwenkachse 36 der Einstelleinrichtung 30 horizontal nach links, tritt die gleiche Verschiebung der elliptischen Bahn und damit der zuvor beschriebenen Eingriffspunkte des Förderendes 24 in den Clipstrang 2 nach links ein.

Bei einer Bewegung der Schwenkachse 36 auf einer Kreisbahn, entsprechend dem gezeigten Ausführungsbeispiel, verschiebt sich diese aber immer gleichzeitig horizontal und vertikal. Durch das Zusammenwirken beider Verstellkomponenten wird zusätzlich eine Änderung der Hubhöhe des Clipstrangs 2 und der Clipführung 4 erreicht.

Um ein ungewolltes Verstellen der Einstelleinrichtung 30 zu verhindern, können Rastelemente vorgesehen sein, die im dargestellten Ausführungsbeispiel als radial angeordnete Bohrungen 38 in der Welle 32 der Einstelleinrichtung 30 ausgeführt sind, in die ein federbelastetes Sicherungselement 39 eingreift. Dieses Sicherungselement 39 ist ein im Wesentlichen zylindrischer Stift, der gegen die Spannung einer Feder 39a in eine der radialen Bohrungen 38 eingreifen kann, um ein ungewolltes Verdrehen der Welle 32 zu verhindern. Die Federspannung ist dabei so gewählt, dass sie einerseits ein Verdrehen der Welle 32 durch die Bewegung des Vorschubelements 20 verhindert, andererseits aber ein beabsichtigtes Verstellen durch manuelles Betätigen des Stellelements 34 erlaubt.

Im dargestellten Ausführungsbeispiel sind drei radiale Bohrungen an der Welle 32 angebracht, zur Anpassung der Clipgrößeneinstellung an drei unterschiedlichen Clipgrößen. Es können selbstverständlich beliebig viele Rastpositionen für das Sicherungselement 39 vorgesehen sein, um eine entsprechende Anpassung der Clipgrößeneinstellung an unterschiedlich viele Clipgrößen zu erreichen.

Abschließend ist noch zu bemerken, dass die Erfindung nicht auf das in den Fig.1 und 2 dargestellte Ausführungsbeispiel beschränkt ist. Es ist beispielsweise denkbar, dass das Vorschubelement 20 im Wesentlichen aus einem Hohlprofil besteht, um beispielsweise eine Verringerung der bewegten Masse zu erreichen, wodurch Vibrationen in der Clipmaschine reduziert werden können.

Die Rückhalteeinrichtung 40 kann auch als Kolben-/Zylinderanordnung gestaltet sein, wobei dann anstelle der in den Fig. 1 und 2 dargestellten zweiten Tasche 5b der Matrize 5 und der Clipführung 4 der Kolben hydraulisch oder pneumatisch in die entsprechende Position gefahren wird. Ebenfalls können anstelle von hydraulischen oder pneumatischen Antrieben elektrische Antrieb verwendet werden.

Ebenso kann die Schwenkachse 36 durch eine Linearführung verstellbar sein. Durch eine entsprechende Anordnung der Linearführung können dann die horizontale und die vertikale Verstellkomponente verschieden gewichtet oder eine von beiden ganz ausgeschlossen werden.

Es ist ebenfalls möglich, das Fixieren des Clipstranges 2 nicht ausschließlich durch die Rückhalteeinrichtung 40 zu realisieren.

Die Rastelemente können so gestaltet, dass sie hör- und/oder fühlbar einrasten, dadurch wird eine genaue Einstellung der gewünschten Clipgröße erleichtert. Es kann ebenfalls vorgesehen sein, dass das Sicherungselement 39 so gestaltet ist, dass es von außen betätigbar ist, beispielsweise durch ein an der Maschine befindliches Betätigungselement. Dadurch kann eine höhere Federspannung zur Arretierung gewählt werden und damit eine sicherere Arretierung erreicht werden.

### Bezugszeichenliste

- 1: Clipfördervorrichtung
- 2: Clipstrang
- 3: Clip
- 4: Clipführung
- 5: Matrize
- 5a: 1.Tasche
- 5b: 2. Tasche
- 6: Scherkante
- 10: Antriebseinheit
- 12: Achse der Antriebseinheit
- 14: Exzenterzapfen
- 20: Vorschubelement
- 22: Antriebsende
- 24: Förderende
- 26: Langloch
- 30: Einstelleinrichtung
- 32: Welle der Einstelleinrichtung
- 34: Stellelement
- 36: Schwenkachse
- 38: Bohrungen
- 39: Sicherungselement
- 39a: Feder
- 40: Rückhalteeinrichtung
- A: Antriebsrichtung
- V: Vorschubrichtung

## Patentansprüche

1. Clipfördervorrichtung zum Fördern eines aus mehreren Clips bestehenden Clipstrangs (2) in einer Clipmaschine, insbesondere einer Wurstclipmaschine, mit einer Antriebseinheit (10) und einem Transportelement (20), das mit seinem Antriebsende (22) mit der Antriebseinheit (10) gekoppelt ist und von der Antriebseinheit (10) in der Weise antreibbar ist, dass sein Förderende (24) eine elliptische Bahn beschreibt und zum schrittweisen Fördern des Clipstranges (2) in Zwischenräume zwischen zwei Clips des Clipstrangs (2) eingreift und diesen schrittweise in Vorschubrichtung (V) fördert,
**dadurch gekennzeichnet, dass** eine Einstelleinrichtung (30) mit einer Schwenkachse (36) vorgesehen ist, um die das Transportelement (20) schwenkbar ist und die in ihrer Lageposition werkzeuglos in der Weise einstellbar ist, dass wenigstens eine der Achsen der von dem Förderende (24) beschriebenen elliptischen Bahn veränderbar ist.

2. Clipfördervorrichtung nach Anspruch 1,
**dadurch gekennzeichnet, dass** die Lageposition der Schwenkachse (36) der Einstelleinrichtung (30) durch einen Exzenter einstellbar ist.

3. Clipfördervorrichtung nach Anspruch 1,
**dadurch gekennzeichnet, dass** die Lageposition der Schwenkachse (36) der Einstelleinrichtung (30) durch eine Linearführung einstellbar ist.

4. Clipfördervorrichtung nach einem der Ansprüche 1 bis 3,
**dadurch gekennzeichnet, dass** die Lageposition der Schwenkachse (36) der Einstelleinrichtung (30) von außen durch ein Stellelement (34) einstellbar ist.

5. Clipfördervorrichtung nach einem der Ansprüche 1 bis 4,
**dadurch gekennzeichnet, dass** die Schwenkachse (36) der Einstelleinrichtung (30) in ein Langloch (26) im Transportelement (20) eingreift.

6. Clipfördervon-ichtung nach einem der Ansprüche 1 bis 5,
**dadurch gekennzeichnet, dass** die Antriebseinheit (10) wenigstens einen Exzenter enthält.

7. Clipfördervorrichtung nach einem der Ansprüche 1 bis 6,
**dadurch gekennzeichnet, dass** die Antriebseinheit (10) um eine feste Achse (12) rotiert.

8. Clipfördervorrichtung nach einem der Ansprüche 1 bis 7,
**dadurch gekennzeichnet, dass** die Achse (12) der Antriebseinheit (10) so einstellbar ist, dass wenigstens eine der Achsen, der von dem Förderende (24) des Transportelements (20) beschriebenen elliptischen Bahn, veränderbar ist.

9. Clipfördervorrichtung nach einem der Ansprüche 1 bis 8,
**dadurch gekennzeichnet, dass** eine selbsttätig wirkende Rückhalteeinrichtung (40) vorgesehen ist, die mit einem, sich am vorderen Ende des Clipstrangs (2) befindlichen Clip (3) in Eingriff bringbar ist.

10. Clipfördervorrichtung nach Anspruch 9,
**dadurch gekennzeichnet, dass** die Rückhalteeinrichtung (40) durch eine an einer Matrize (5) vorgesehene Ausnehmung (5b) und durch ein Kraftaufbringungsmittel, welches eine im Wesentlichen senkrecht zur Vorschubrichtung (V) auf den Clipstrang wirkende Druckkraft aufbringt, gebildet ist.

## Claims

1. Clip conveyor apparatus for conveying a clip line (2) comprising a plurality of clips in a clipping machine, in particular a sausage clipping machine, comprising a drive unit (10) and an transport element (20) which is coupled with its drive end (22) to the drive unit (10) and is drivable by the drive unit (10) in such a way that its conveyor end (24) describes an elliptical path and engages into intermediate spaces between two clips of the clip line (2) for stepwise conveyance of the clip line (2) and conveys same stepwise in the advance direction (V),
**characterized in that** there is provided an adjusting device (30) having a pivot axis (36) about which the transport element (20) is pivotable and which is adjustable in its position without a tool in such a way that at least one of the axes of the elliptical path described by the conveyor end (24) is variable.

2. The clip conveyor apparatus of claim 1,
**characterized in that** the position of the pivot axis (36) of the adjusting device (30) is adjusted by an eccentric.

3. The clip conveyor apparatus of claim 1,
**characterized in that** the position of the pivot axis (36) of the adjusting device (30) is adjusted by a linear guide.

4. The clip conveyor apparatus according to one of the claims 1 to 3,
**characterized in that** the position of the pivot axis (36) of the adjusting device (30) is adjusted by an adjusting element (34) from the exterior.

5. The clip conveyor apparatus according to one of the claims 1 to 4,
**characterized in that** the pivot axis (36) of the adjusting device (30) engages into a slot (26) in the transport element (20).

6. The clip conveyor apparatus according to one of the claims 1 to 5,
**characterized in that** the drive unit (10) includes at least one eccentric.

7. The clip conveyor apparatus according to one of the claims 1 to 6,
**characterized in that** the drive unit (10) rotates about a fixed axis (12).

8. The clip conveyor apparatus according to one of the claims 1 to 7,
**characterized in that** the axis (12) of the drive unit (10) is movable to vary at least one of the axes of the elliptical path described by the conveyor end (24) of the transport element (20).

9. The clip conveyor apparatus according to one of the claims 1 to 8,
**characterized in that** there is provided an automatically acting retaining device (40) capable of being brought into engagement with a clip (3) disposed at the front end of the clip line (2).

10. The clip conveyor apparatus of claim 9,
**characterized in that** the retaining device (40) is formed by a recess (5b) provided on a die (5) and by a means for applying a force which applies a pressure force acting substantially perpendicularly to the advance direction (V) on the clip line.

## Revendications

1. Dispositif de convoyage de clips pour convoyer une corde de clips (2) se composant d'une pluralité de clips dans une machine de clips, en particulier dans une machine de clips pour saucissons, avec une unité d'actionnement (10) et un élément de transport (20) qui est accouplé avec l'unité d'actionnement (10) par son extrémité d'actionnement (22) et qui peut être actionné par l'unité d'actionnement (10) d'une telle manière que son extrémité de convoyage (24) décrit une trajectoire elliptique et interfère dans des espaces intermédiaries entre deux clips de la corde de clips (2) pour convoyer pas à pas la corde de clips (2) et la convoit pas à pas en direction d'avance (V),
**caractérisé en ce qu'**il est prévu une installation d'ajustement (30) avec un axe de pivotage (36) autour duquel l'élément de transport (20) est pivotable et lequel est ajustable sans un outil en sa position d'une telle manière qu'au moins un des axes de la trajectoire elliptique décrit par l'extrémité de convoyage (24) est variable.

2. Dispositif de convoyage de clips selon la revendication 1,
**caractérisé en ce que** la position de l'axe de pivotage (36) de l'installation d'ajustement (30) est adjustable par un excentrique.

3. Dispositif de convoyage de clips selon la revendication 1,
**caractérisé en ce que** la position de l'axe de pivotage (36) de l'installation d'ajustement (30) est adjustable par un guidage linéaire.

4. Dispositif de convoyage de clips selon une des revendications 1 à 3,
**caractérisé en ce que** la position de l'axe de pivotage (36) de l'installation d'ajustement (30) est adjustable de l'extérieur par un element de réglage (34).

5. Dispositif de convoyage de clips selon une des revendications 1 à 4,
**caractérisé en ce que** l'axe de pivotage (36) de l'installation d'ajustement (30) interfère dans un trou longitudinal (26) dans l'élément de transport (20).

6. Dispositif de convoyage de clips selon une des revendications 1 à 5,
**caractérisé en ce que** l'unité d'actionnement (10) contient au moins un excentrique.

7. Dispositif de convoyage de clips selon une des revendications 1 à 6,
**caractérisé en ce que** l'unité d'actionnement (10) tourne autour d'un axe fixe (12).

8. Dispositif de convoyage de clips selon une des revendications 1 à 7,
**caractérisé en ce que** l'axe (12) de l'unité d'actionnement (10) est ajustable d'une telle manière qu'au moins un des axes, de la trajectoire elliptique décrite par l'extrémité de convoyage (24) de l'élément de transport (20), peut être varié.

9. Dispositif de convoyage de clips selon une des revendications 1 à 8,
**caractérisé en ce qu'**il est prévu une installation de retenue (40) operant automatiquement, laquelle peut être mis en interférence avec un clip (3) disposé à l'extrémité antérieure de la corde de clips (2).

10. Dispositif de convoyage de clips selon la revendication 9,
**caractérisé en ce que** l'installation de retenue (40) est formée par un creux prévu à une matrice (5) et par un moyen pour appliquer une force, lequel applique une force opérant essentiellement perpendiculaire à la direction d'avance (V) sur la corde de clips (2).
